# EUROPEAN PATENT APPLICATION

(11) **EP 4 345 986 A2**
(43) Date of publication of application: **03.04.2024**
(21) Application number: 23196189.7
(22) Date of filing: 08.09.2023
(51) Int. Cl.: H01M 10/613, F28F 1/02, F28F 3/12, F28F 9/007, H01M 10/625, H01M 10/647, H01M 10/6554, H01M 10/6556, H01M 10/6568, H01M 50/204, H01M 50/264, H01M 50/291

(54) **VEHICLE BATTERY COOLING APPARATUS**

(30) Priority: 12.09.2022 JP 2022144428
(71) Applicant: VALEO SYSTEMES THERMIQUES, 78320 Le Mesnil Saint-Denis (FR)
(72) Inventor: PERRIN, Thibaut, 78322 Le Mesnil-Saint-Denis Cedex (FR); TAKANO, Akihiko, Kumagaya-shi, 360-0193 (JP)
(74) Representative: Valeo Systèmes Thermiques

(57) **Abstract**

A heat exchanger (20) includes a first heat transfer medium flow path (51) whose dimension is relatively large and which is in contact with a press flat surface (31) and a second heat transfer medium flow path (52) whose dimension is smaller than the first heat transfer medium flow path (51) and which is not in contact with the press flat surface (31, 31A, 31B) based on a direction along a direction in which a press member (30) presses. An intervening member (60) that is capable of coming into contact with the second heat transfer medium flow path (52) and, at the same time, capable of coming into contact with the press flat surface (31) is disposed in a gap region (S) between the second heat transfer medium flow path (52) and the press flat surface (31). The press flat surface (31) is capable of pressing the second heat transfer medium flow path (52) via the intervening member (60).

## Description

### BACKGROUND OF THE INVENTION

### 1. Field of the Invention

The present invention relates to a vehicle battery cooling apparatus capable of cooling a battery by exchanging heat with a heat transfer medium.

### 2. Description of the Related Art

In an electric vehicle which travels by driving a travel motor using power, and a hybrid vehicle whose power source consists of an internal combustion engine and a motor, a battery that accumulates electricity and a vehicle battery cooling apparatus that is capable of cooling the battery are mounted. An existing technique related to the vehicle battery cooling apparatus is disclosed in Patent Literature 1.

The vehicle battery cooling apparatus disclosed in Patent Literature 1 includes: a flat heat exchanger through which a heat transfer medium flows; a press member which is capable of pressing the heat exchanger against a lower surface of a battery; and a case which houses the press member.

The press member includes: a press main body member which has a press flat surface in contact with a lower surface of the heat exchanger; and a leaf spring which is disposed between the press main body member and the case. The force generated by this leaf spring enables the heat exchanger to be pressed against the battery reliably.

For example, a heat exchanger of Patent Literature 2 can be employed as the heat exchanger of the cooling apparatus. The heat exchanger of Patent Literature 2 includes a first heat transfer medium flow path and a second heat transfer medium flow path whose heights are different from each other. The height of the second heat transfer medium flow path is lower than that of the first heat transfer medium flow path.
Patent Literature 1: US2015/0044540A
Patent Literature 2: JPH06-246365A

### SUMMARY OF THE INVENTION

In the case of employing the heat exchanger of Patent Literature 2 in the cooling apparatus, when the cooling apparatus is attached to the battery, a gap is formed between the press member and the second heat transfer medium flow path having a low height. In other words, since the press member is not in contact with the second heat transfer medium flow path of the heat exchanger, the press member is unable to press a surface opposite from the second heat transfer medium flow path against the battery, thus deteriorating the cooling performance.

The present invention aims to provide a vehicle battery cooling apparatus having a high cooling performance.

In the following description, reference numerals in the accompanying drawings are appended in parentheses to facilitate understanding of the present invention, but the present invention is not limited to illustrated embodiments.

The present invention provides a vehicle battery cooling apparatus (11) including:
a heat exchanger (20) that includes a cooling flat surface (22) which is capable of being thermally coupled to a vehicle battery (10) and multiple heat transfer medium flow paths (51, 52) which are formed to protrude opposite from the cooling flat surface (22) and through which a heat transfer medium flows; and
a press member (30) that is capable of pressing the heat exchanger (20) against the vehicle battery (10) and has a press flat surface (31, 31A, 31B) which is in contact with a part of the multiple heat transfer medium flow paths (51, 52) and presses the part of the multiple heat transfer medium flow paths (51, 52) against the vehicle battery (10), in which
the multiple heat transfer medium flow paths (51, 52) include a first heat transfer medium flow path (51) whose dimension is relatively large and which is in contact with the press flat surface (31, 31A, 31B) and a second heat transfer medium flow path (52) whose dimension is smaller than the first heat transfer medium flow path (51) and which is not in contact with the press flat surface (31, 31A, 31B) based on a direction along a direction in which the press member (30) presses,
an intervening member (60, 60A, 60B, 60C) that is capable of coming into contact with the second heat transfer medium flow path (52) and, at the same time, capable of coming into contact with the press flat surface (31, 31A, 31B) is disposed in a gap region (S) between the second heat transfer medium flow path (52) and the press flat surface (31, 31A, 31B), and
the press flat surface (31, 31A, 31B) is capable of directly pressing the first heat transfer medium flow path (51) against the vehicle battery (10) and, at the same time, capable of pressing the second heat transfer medium flow path (52) against the vehicle battery (10) via the intervening member (60, 60A, 60B, 60C).

The present invention can provide a vehicle battery cooling apparatus having a high cooling performance.

### BRIEF DESCRIPTION OF THE DRAWINGS

Fig. 1 is a diagram schematically illustrating a cross-section of a vehicle battery cooling apparatus of a first embodiment attached to a vehicle battery.
Fig. 2 is a schematic perspective diagram of the vehicle battery cooling apparatus illustrated in Fig. 1.
Fig. 3 is a diagram illustrating dimensions of a heat exchanger and a press member prior to attachment to the vehicle battery.
Fig. 4 is a diagram illustrating a gap space formed in the heat exchanger and an intervening member disposed in the gap space.
Fig. 5 is a diagram schematically illustrating a cross-section of a vehicle battery cooling apparatus of a second embodiment attached to the vehicle battery.
Fig. 6 is a diagram schematically illustrating a cross-section of a vehicle battery cooling apparatus of a third embodiment attached to the vehicle battery.
Fig. 7 is a diagram schematically illustrating a cross-section of a vehicle battery cooling apparatus of a fourth embodiment attached to the vehicle battery.

### DESCRIPTION OF THE PREFERRED EMBODIMENTS

Embodiments will be described below with reference to the accompanying drawings. In the drawings, Up indicates an upper side and Dn indicates a lower side.

### Embodiments

### First Embodiment

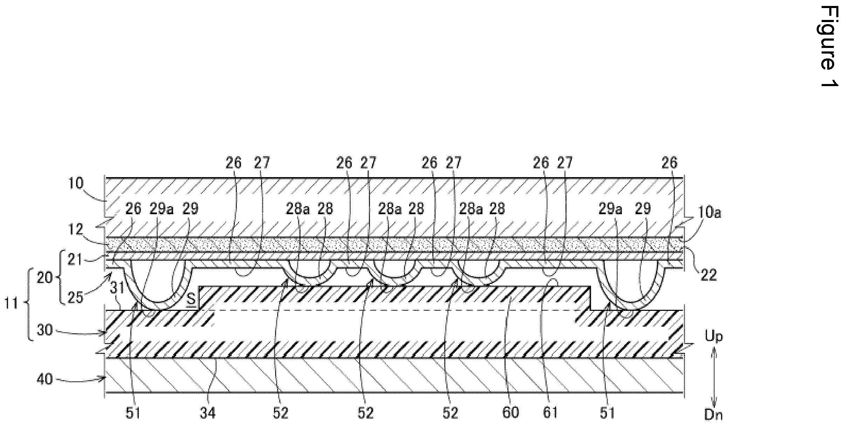

Fig. 1 illustrates: a battery 10 (vehicle battery 10) that accumulates electricity; and a cooling apparatus 11 (vehicle battery cooling apparatus) that is capable of cooling the battery 10. The battery 10 and the cooling apparatus 11 are mounted, for example, in an electric vehicle which travels by driving a travel motor using power, and a hybrid vehicle whose power source consists of an internal combustion engine and a motor.

### Battery

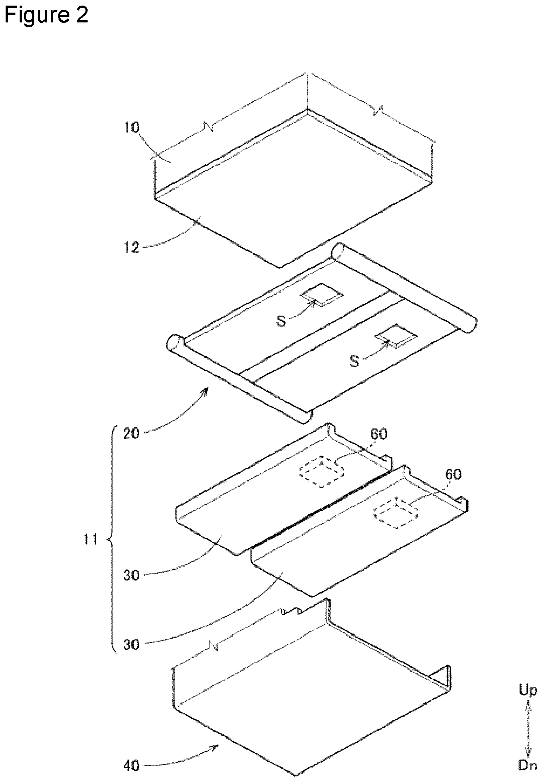

Reference is made to Figs. 1 and 2. The battery 10 is used for energizing a motor for traveling of a vehicle, and generates heat and increases in temperature during charging. Between the battery 10 and the cooling apparatus 11, a close contact member 12 is provided to cause the cooling apparatus 11 to come into close contact with a lower surface 10a of the battery 10. The close contact member 12 is made of an elastic material. The battery 10 and the cooling apparatus 11 exchange heat via the close contact member 12.

### Cooling Apparatus

The cooling apparatus 11 of the first embodiment includes: a heat exchanger 20 that is capable of cooling the battery 10; and two press members 30 that are capable of pressing the heat exchanger 20 against the close contact member 12 attached to the lower surface 10a of the battery 10. The press members 30 are housed at least inside a battery case 40 mounted on the vehicle.

Note that, when the cooling apparatus 11 is attached to the lower surface 10a of the battery 10, the press members 30 can press the heat exchanger 20 against the battery 10 using the battery 10's own weight. The cooling apparatus 11 may be attached to an upper surface or a side surface of the battery 10. In the case of attaching the cooling apparatus 11 to the upper surface or the side surface of the battery 10, known attachment structures such as a structure of fixing the battery case 40 to the battery 10 may be used.

### Heat Exchanger

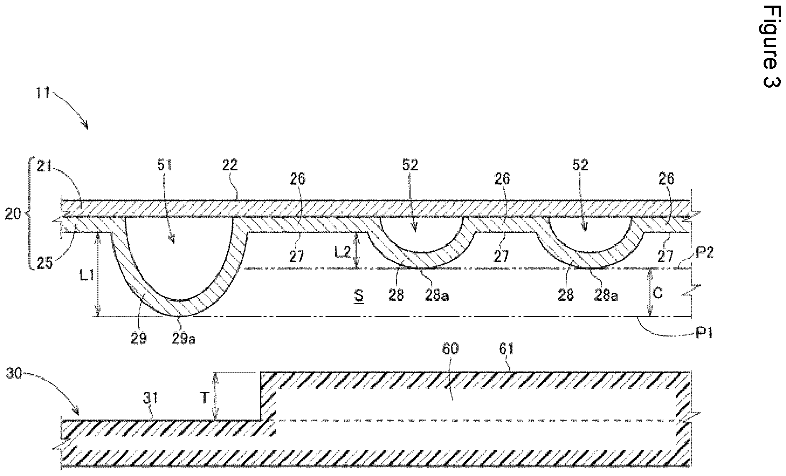

Reference is made to Fig. 3. The heat exchanger 20 is made in such a way that a first plate member 21 located on the battery 10 side (upper side) and a second plate member 25 located on the press member 30 side (lower side) overlap with each other.

Portions where these members overlap with each other are joined (welded or brazed, for example).

### First Plate Member

The first plate member 21 is in the form of a flat plate as a whole. The first plate member 21 has a cooling flat surface 22 that is capable of coming into contact with the close contact member 12 (see Fig. 2). The cooling flat surface 22 is capable of being thermally coupled to the battery 10. In order to join the first plate member 21 to the second plate member 25 by welding or brazing, the first plate member is preferably made using an aluminum alloy or copper. Concave-convex portions (not illustrated) may be formed in the first plate member 21 by press machining as long as the first plate member 21 has the cooling flat surface 22 and can be joined to the second plate member 25.

### Second Plate Member

The second plate member 25 is a molded part formed by press machining. The second plate member 25 is made in such a way that multiple joint portions 26 joined to the first plate member 21 and multiple semi-cylindrical protrusion portions 28, 29 protruding toward the press members 30 than the joint portions 26 are formed in one unit. The direction in which the protrusion portions 28, 29 protrude can also be said as a direction along the direction in which the press members 30 press. In order to join the second plate member 25 to the first plate member 21 by welding or brazing, the second plate member is preferably made using an aluminum alloy or copper.

Out of the multiple protrusion portions 28, 29, ones that greatly protrude are set as first protrusion portions 29, and ones that protrude smaller than the first protrusion portions 29 are set as second protrusion portions 28. The protrusion portions 28, 29 of the second plate member 25 and the first plate member 21 constitute multiple heat transfer medium flow paths 51, 52 through which a heat transfer medium can flow. For the heat transfer medium, a cooling water made by being cooled by a chiller (not illustrated), and a gas-liquid mixed refrigerant made by being thermally insulated and expanded are used.

### First Heat Transfer Medium Flow Path, Second Heat Transfer Medium Flow Path

The joint portions 26 of the second plate member 25 each have an opposed surface 27 that is opposed to the press member 30. The dimensions of the protrusion portions 28, 29 based on this opposed surface 27 are set as dimensions L1, L2 of the heat transfer medium flow paths. The multiple heat transfer medium flow paths 51, 52 include first heat transfer medium flow paths 51 and second heat transfer medium flow paths 52 whose dimensions are different from each other. The dimension L2 of each second heat transfer medium flow path 52 (the dimension from the opposed surface 27 to a tip 28a of the second protrusion portion 28 in the press direction) is smaller than the dimension L1 of each first heat transfer medium flow path 51 (the dimension from the opposed surface 27 to a tip 29a of the first protrusion portion 29 in the press direction). The cross-sectional shape of the second heat transfer medium flow path 52 is more flattened than that of the first heat transfer medium flow path 51. By making the heat transfer medium flow path's equivalent diameter (hydraulic diameter) of the second heat transfer medium flow path 52 relatively smaller, it is possible to enhance the heat exchange efficiency. Alternatively, by making the cross-sectional area of the second heat transfer medium flow path 52 smaller than that of the first heat transfer medium flow path 51 to make the flow velocity of the heat transfer medium relatively faster, it is possible to help mixing of the heat transfer medium flowing through the second heat transfer medium flow path 52 and thus enhance the heat exchange efficiency. In other words, by providing the second heat transfer medium flow path 52 in the heat exchanger 20, it is possible to enhance the cooling performance for a predetermined region of the battery 10.

### Press Member

Reference is made to Figs. 1 and 2. Each press member 30 includes a press flat surface 31 that is capable of pressing the heat exchanger 20 against the battery 10 when the cooling apparatus 11 is attached to the battery 10 (hereinafter referred to as "during attachment"). The press flat surface 31 is set large enough to cover the entire surface of the heat exchanger 20 on the heat transfer medium flow paths 51, 52 side thereof. The whole shape of the press member 30 is not limited to a plate shape as long as the press member has this press flat surface 31.

Note that, the cooling apparatus 11 of the first embodiment includes no leaf spring 70 to be described later, and thus a surface 34 opposite from the press flat surface 31 can be directly in contact with the battery case 40 during attachment.

As illustrated in Fig. 1, during attachment, the press flat surface 31 is in contact with a part of the heat transfer medium flow paths 51, 52. Specifically, during attachment, the press flat surface 31 is in contact with the first heat transfer medium flow paths 51. The press flat surface 31 is not in contact with the tips of the second heat transfer medium flow paths 52. Note that, in Fig. 1, the press flat surface 31 is constituted of: a solid line portion that is in contact with the first heat transfer medium flow paths 51; and a virtual dotted line portion that is located on the same plane as this solid line portion and described in a boundary portion with an intervening member 60 to be described later.

### Gap Region

A gap generated during attachment between the second heat transfer medium flow paths 52 and the press flat surface 31 is set as a gap region S.

### Intervening Member

The intervening member 60 is disposed in the gap region S. The intervening member 60 is formed as an integrated unit with the press member 30. The intervening member 60 and the press member 30 are made of an elastic material. The elastic material is urethane foam, for example.

The intervening member 60 has a first contact flat surface 61 that is in contact with the second heat transfer medium flow paths 52 (the tips 28a of the second protrusion portions 28) during attachment. In other words, during attachment, the press flat surface 31 presses the second heat transfer medium flow paths 52 against the battery 10 via the first contact flat surface 61 of the intervening member 60. The press flat surface 31 directly presses the first heat transfer medium flow paths 51 against the battery 10.

### Clearance C

Reference is made to Fig. 3. A plane that is parallel to the cooling flat surface 22 and includes the tips of the first heat transfer medium flow paths 51 (the tips 29a of the first protrusion portions 29) is set as a first plane P1. A plane that is parallel to the cooling flat surface 22 and includes the tips of the second heat transfer medium flow paths 52 (the tips 28a of the second protrusion portions 28) is set as a second plane P2. A clearance between the first plane P1 and the second plane P2 (a clearance between the tip of each first heat transfer medium flow path 51 and the tip of each second heat transfer medium flow path 52) generated before the cooling apparatus 11 is attached to the battery 10 (hereinafter referred to as "before attachment") is set as a clearance C.

Note that, the clearance C can also be said as the height of the gap region S. The first plane P1 is a plane that includes the press flat surface 31 during attachment. The second plane P2 is a plane that includes the first contact flat surface 61 during attachment.

### Thickness of Intervening Member

A thickness T of the intervening member 60 is set slightly larger than the clearance C (T>C). However, the thickness T of the intervening member 60 can be changed as appropriate as long as the first contact flat surface 61 of the intervening member 60 is in contact with the second heat transfer medium flow paths 52 and the press flat surface 31 is in contact with the first heat transfer medium flow paths 51 during attachment.

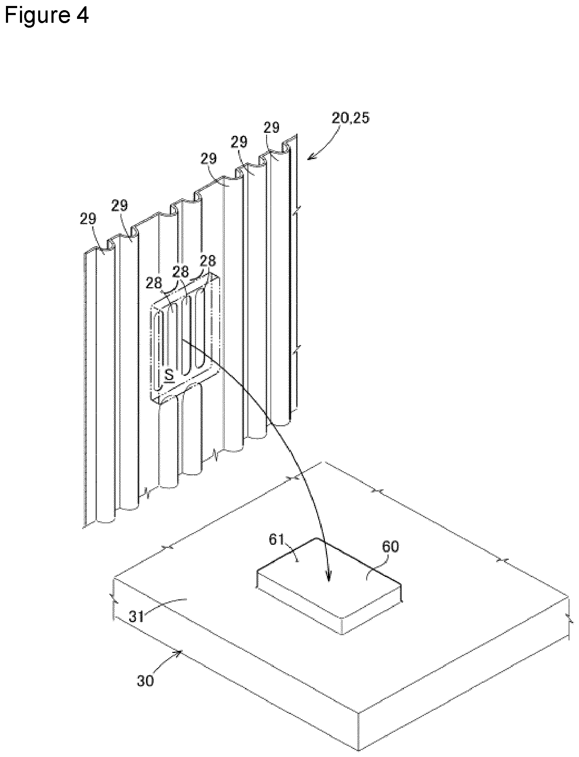

Reference is made to Figs. 2 to 4. The gap region S can also be said as a space that is formed in a concave shape out of portions of the heat exchanger 20 on the press member 30 side thereof. The position where the gap region S is formed and the number of the gap region S can be changed as appropriate. Further, the outer shape of the heat exchanger 20 is not limited to that of the first embodiment as long as the heat exchanger includes the cooling flat surface 22 and has such a shape that the gap region S is formed by the first plane P1 and the second plane P2 formed to have a difference of elevation.

### Effects of First Embodiment

Reference is made to Fig. 3. The cooling apparatus 11 includes the first heat transfer medium flow paths 51 and the second heat transfer medium flow paths 52 having the different dimensions L1, L2 from each other, and thus the gap region S is formed in the cooling apparatus 11.

Reference is made to Fig. 1. The configuration of the cooling apparatus 11 during attachment will be described. The intervening member 60 is disposed in the gap region S. This intervening member 60 has the first contact flat surface 61 that is capable of coming into contact with the second heat transfer medium flow paths 52. Further, the press member 30 has the press flat surface 31 that is capable of coming into contact with the tips of the first heat transfer medium flow paths 51.

By the above configuration, the press member 30 can directly press the first heat transfer medium flow paths 51 against the battery 10 and, at the same time, can press the second heat transfer medium flow paths 52 against the battery 10 via the intervening member 60. This can enhance the cooling performance of the cooling apparatus 11. Since the second heat transfer medium flow paths 52 having a higher cooling capability than the first heat transfer medium flow paths 51 can be pressed against the battery 10, it is possible to enhance the cooling performance of the cooling apparatus 11. Further, by providing the second heat transfer medium flow paths 52 to be corresponding to the region with an especially large amount of heat in the battery 10, it is possible to effectively suppress deterioration of the battery 10 due to heat.

Reference is made to Fig. 3. In addition, the thickness T of the intervening member 60 is set slightly larger than the clearance C (T>C). This enables the press member 30 to press the second heat transfer medium flow paths 52 more reliably. This can further enhance the cooling performance of the heat exchanger 20.

In addition, the intervening member 60 is formed as an integrated unit with the press member 30. This can decrease the number of components constituting the cooling apparatus 11.

In addition, the intervening member 60 and the press member 30 are made of an elastic material. During attachment, the intervening member 60 and the press member 30 are compressed. Since the press member 30 formed as an integrated unit with the intervening member 60 are made of an elastic material, many points where a force is applied during attachment are formed, so that it enables to press the heat exchanger 20 against the battery 10 more reliably.

### Second Embodiment

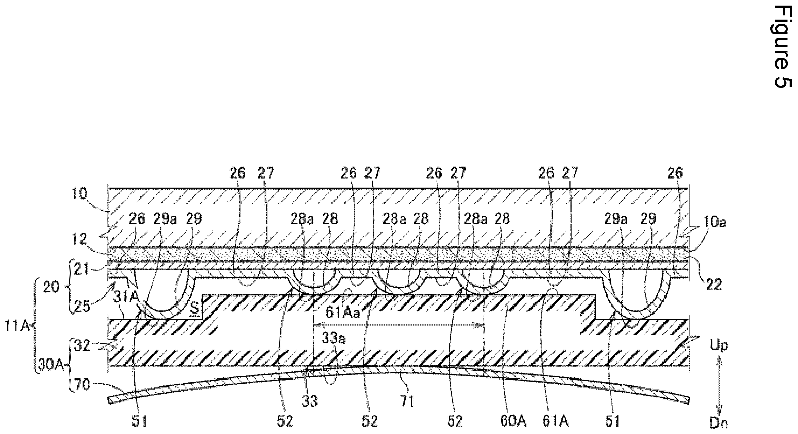

Fig. 5 illustrates a state where a cooling apparatus 11A according to a second embodiment is attached to the battery 10. For the configuration and effects in common with the cooling apparatus 11 of the first embodiment, the same reference numerals as those of the first embodiment are given and their description will be omitted.

A press member 30A includes: a press main body member 32 that has a press flat surface 31A; and the leaf spring 70 that is capable of pressing the press main body member 32 against the heat exchanger 20. The leaf spring 70 has a curved shape in cross section such that it bulges toward the press main body member 32 (to the upper side). The material of the leaf spring 70 is not particularly limited as long as it can press the press main body member 32, and a metallic material such as a stainless material may be used. Note that, although not illustrated in the drawing, the leaf spring 70 is supported by the battery case 40 (see Fig. 1).

In a first contact flat surface 61A of an intervening member 60A, a range in contact with the second heat transfer medium flow paths 52 is set as a contact range 61Aa. In the press main body member 32, a surface opposite from the press flat surface 31A is set as an opposite flat surface 33. In the opposite flat surface 33, a range corresponding to the contact range 61Aa is set as a corresponding range 33a. An apex portion 71 of the leaf spring 70 is located in the corresponding range 33a of the opposite flat surface 33. This enables the press member 30A to press the second heat transfer medium flow paths 52 via the intervening member 60A more reliably.

The press main body member 32 and the intervening member 60A are formed in one unit. The press main body member 32 and the intervening member 60A are preferably made of a resin material having a predetermined strength. For example, polypropylene is used as the resin material.

### Third Embodiment

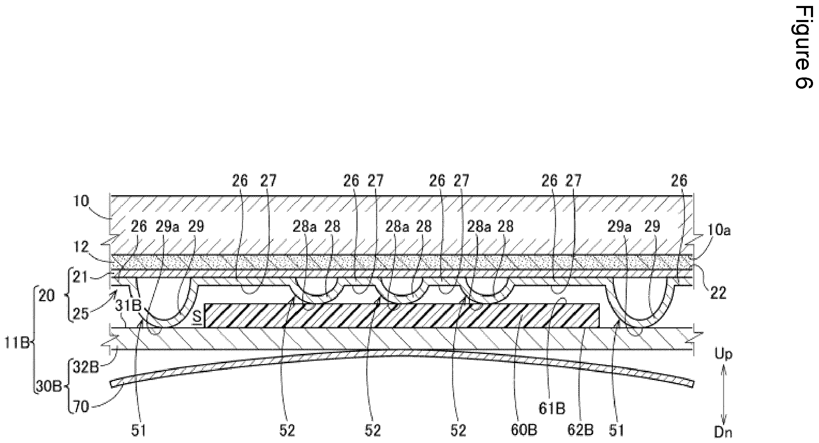

Fig. 6 illustrates a cooling apparatus 11B according to a third embodiment. For the configuration and effects in common with the cooling apparatus 11A of the second embodiment, the same reference numerals as those of the second embodiment are given and their description will be omitted.

A press main body member 32B and an intervening member 60B are separate bodies. Both the press main body member 32B and the intervening member 60B are plate-shaped and preferably made of a resin material having a predetermined strength.

The press main body member 32B may be made of a resin material having a predetermined strength (such as polypropylene), and the intervening member 60B may be made of a foamed material (such as urethane foam). The press main body member 32B having a predetermined strength can receive a force by which the apex portion 71 of the leaf spring 70 presses, and the intervening member 60B made of a foamed material can transmit the press force thus received to the multiple second heat transfer medium flow paths 52 in a distributed manner. Thus, it is possible to stably press the second heat transfer medium flow paths 52 against the battery 10.

The intervening member 60B includes: a first contact flat surface 61B that is in contact with the second heat transfer medium flow paths 52 during attachment; and a second contact flat surface 62B that is in contact with a press flat surface 31B of the press main body member 32B during attachment.

### Fourth Embodiment

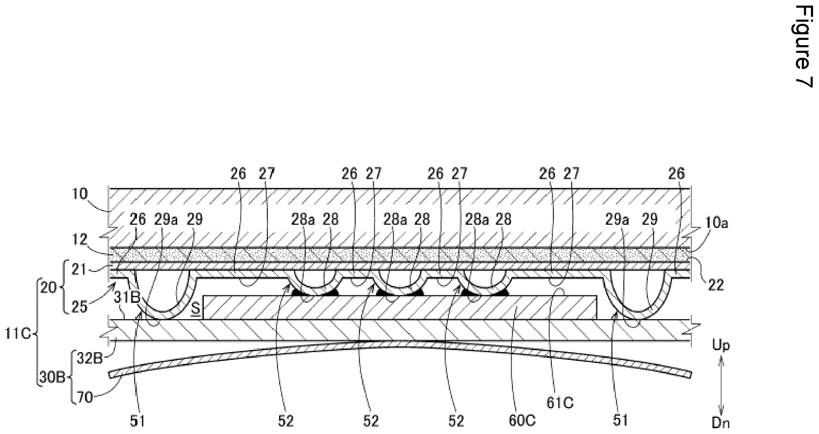

Fig. 7 illustrates a cooling apparatus 11C according to a fourth embodiment. For the configuration and effects in common with the cooling apparatus 11B of the third embodiment, the same reference numerals as those of the third embodiment are given and their description will be omitted.

An intervening member 60C is made of aluminum. The shape and size of the intervening member 60C are the same as those of the intervening member 60B of the third embodiment. The joint portions 26 of the first plate member 21 and the second plate member 25 are joined by brazing. A first contact flat surface 61C of the intervening member 60C and the second heat transfer medium flow paths 52 (the tips 28a of the second protrusion portions 28) are joined by brazing.

The present invention is not limited to the first to fourth embodiments as long as the operations and effects of the present invention are exhibited.

The elements of the first to fourth embodiments can be combined as appropriate.

The vehicle battery cooling apparatus according to the present invention is suitable for being mounted on a passenger vehicle.

### Reference Signs List

Vehicle battery ... 10
Vehicle battery cooling apparatus ... 11
Heat exchanger ... 20
Cooling flat surface ... 22
Press member ... 30
Press flat surface ... 31, 31A, 31B
Press main body member ... 32
Surface opposite from press flat surface ... 33
Corresponding range ... 33a
Multiple heat transfer medium flow paths ... 51, 52
First heat transfer medium flow path ... 51
Second heat transfer medium flow path ... 52
Intervening member ... 60, 60A, 60B, 60C
Contact range ... 61Aa
Leaf spring ... 70
Apex portion of leaf spring ... 71
Gap region ... S
Thickness of intervening member ... T

## Claims

1. A vehicle battery cooling apparatus (11) including:
a heat exchanger (20) that includes a cooling flat surface (22) which is capable of being thermally coupled to a vehicle battery (10) and a plurality of heat transfer medium flow paths (51, 52) which are formed to protrude opposite from the cooling flat surface (22) and through which a heat transfer medium flows; and
a press member (30) that is capable of pressing the heat exchanger (20) against the vehicle battery (10) and has a press flat surface (31, 31A, 31B) which is in contact with a part of the plurality of heat transfer medium flow paths (51, 52) and presses the part of the plurality of heat transfer medium flow paths (51, 52) against the vehicle battery (10), wherein
the plurality of heat transfer medium flow paths (51, 52) include a first heat transfer medium flow path (51) whose dimension is relatively large and which is in contact with the press flat surface (31, 31A, 31B) and a second heat transfer medium flow path (52) whose dimension is smaller than the first heat transfer medium flow path (51) and which is not in contact with the press flat surface (31, 31A, 31B) based on a direction along a direction in which the press member (30) presses,
an intervening member (60, 60A, 60B, 60C) that is capable of coming into contact with the second heat transfer medium flow path (52) and, at the same time, capable of coming into contact with the press flat surface (31, 31A, 31B) is disposed in a gap region (S) between the second heat transfer medium flow path (52) and the press flat surface (31, 31A, 31B), and
the press flat surface (31, 31A, 31B) is capable of directly pressing the first heat transfer medium flow path (51) against the vehicle battery (10) and, at the same time,
capable of pressing the second heat transfer medium flow path (52) against the vehicle battery (10) via the intervening member (60, 60A, 60B, 60C).

2. The vehicle battery cooling apparatus (11) according to claim 1, wherein, based on the direction along the direction in which the press member (30) presses, a thickness (T) of the intervening member (60, 60A, 60B, 60C) is larger than a dimension (C) of the gap region (S).

3. The vehicle battery cooling apparatus (11) according to claim 1 or 2, wherein the intervening member (60, 60A, 60B, 60C) is formed as an integrated unit with the press member (30).

4. The vehicle battery cooling apparatus (11) according to claim 3, wherein the intervening member (60, 60A, 60B, 60C) and the press member (30) are made of an elastic material.

5. The vehicle battery cooling apparatus (11) according to claim 1, wherein
the press member (30) includes a press main body member (32) that has the press flat surface (31, 31A, 31B) and a leaf spring (70) that has a curved shape in cross section and is capable of pressing the press main body member (32) against the heat exchanger (20) by an elastic force, and in a surface (33) opposite from the press flat surface (31, 31A, 31B), an apex portion (71) of the leaf spring (70) is located in a corresponding range (33a) corresponding to a contact range (61Aa) where the intervening member (60, 60A, 60B, 60C) and the second heat transfer medium flow path (52) are in contact with each other.
